# EUROPEAN PATENT APPLICATION

(11) **EP 1 475 787 A1**
(43) Date of publication of application: **10.11.2004**
(21) Application number: 03706943.2
(22) Date of filing: 14.02.2003
(51) Int. Cl.: G11B 7/005, G11B 7/125

(54) **METHOD FOR REPRODUCING INFORMATION FROM OPTICAL RECORDING MEDIUM, INFORMATION REPRODUCER, AND OPTICAL RECORD MEDIUM**

(30) Priority: 14.02.2002 JP 2002037236
(71) Applicant: TDK Corporation, Tokyo 103-8272 (JP)
(72) Inventor: MIURA, Hideaki, TDK Corporation, Tokyo 103-8272 (JP); KATO, Tatsuya, TDK Corporation, Tokyo 103-8272 (JP)
(74) Representative: HOFFMANN - EITLE
(86) International application number: PCT/JP2003/001549
(87) International publication number: WO 2003/069608

(57) **Abstract**

It is an object of the present invention to provide an information reproducing method for reproducing information from a data rewritable type optical recording medium having a plurality of information recording layers, which can prevent the data degradation phenomenon from occurring. The information reproducing method according to the present invention is directed to reproducing information from an optical recording medium 10 having at least a stacked L0 layer 20 and L1 layer 30 by projecting a laser beam thereonto via a light incidence plane 13a and information is reproduced by setting λ/NA to be equal to or shorter than 700 nm, where λ is a wavelength of the laser beam and NA is a numerical aperture (NA) of an objective lens, and setting the laser beam to a reproducing power *Pr0* when information recorded in the L0 layer 20 is to be reproduced and a reproducing power *Pr1* when information recorded in the L1 layer 30 is to be reproduced.

## Description

### BACKGROUND OF THE INVENTION

The present invention relates to an information reproducing method for reproducing information from an optical recording medium, and particularly to an information reproducing method for reproducing information from a data rewritable type optical recording medium having a plurality of information recording layers. Further, the present invention relates to an information reproducing apparatus for reproducing information from an optical recording medium, and particularly to an information reproducing apparatus for reproducing information from a data rewritable optical recording medium having a plurality of information recording layers. Furthermore, the present invention relates to an optical recording medium, and particularly to a data rewritable optical recording medium.

### DESCRIPTION OF THE PRIOR ART

Optical recording media typified by the CD and the DVD have been widely used as recording media for recording digital data. The recording capacity demanded of such optical recording media has increased year by year, and various proposals have been made to achieve this. One of these proposals is a technique that uses a two-layer structure for the information recording layers contained in the optical recording media, which has found practical application in the DVD-Video and DVD-ROM formats which are read-only optical storage media. With such read-only optical recording media, pre-pits formed on the substrate surface become the information recording layer, and such substrates have a laminated structure with an intervening intermediate layer.

In addition, in recent years, proposals have been made for optical recording media with a two-layer structure for the information recording layer to be used also as an optical recording medium in which data can be rewritten (data rewritable type optical recording medium) (See Japanese Patent Application Laid Open NO. 2001-273638). Such a data rewritable type optical recording medium has a structure in which a recording film and dielectric films between which they are sandwiched form an information recording layer, and these information recording layers are laminated.

A phase change material is generally used for forming a recording film of a data rewritable type optical recording medium and data are recorded utilizing the difference in the reflection coefficients between the case where the recording film is in a crystal phase and the case where it is in an amorphous phase. More specifically, in an unrecorded state, substantially the entire surface of the recording film is in a crystal phase and when data are recorded, the phase of a predetermined region of the recording film is changed to the amorphous phase to form a recording pit. The phase of the phase change material in the crystal phase can be changed to the amorphous phase by heating the phase change material to a temperature equal to or higher than the melting point thereof and quickly cooling it. On the other hand, the phase change material in the amorphous phase can be crystallized by heating the phase change material to a temperature equal to or higher than the crystallization temperature thereof and gradually cooling it.

Such heating and cooling can be performed by adjusting the power (output) of a laser beam. In other words, it is possible not only to record data in an unrecorded recording film but also to directly overwrite (direct-overwrite) a recording mark already formed in a region of the recording film with a different recording mark by modulating the intensity of the laser beam. Generally, the power of the laser beam is modulated in accordance with a pulse waveform having an amplitude between a recording power (*Pw*) and a bottom power (*Pb*) in order to heat the recording film to a temperature equal to or higher than the melting point thereof and the power of the laser beam is set to the bottom power (*Pb*) in order to quickly cool the recording film. Further, in order to heat the recording film to a temperature equal to or higher than the crystallization temperature thereof and gradually cool it, the power of a laser beam is set to an erasing power (*Pe*). In this case, the erasing power (*Pe*) is set to a level at which the recording film is heated to a temperature equal to or higher than the crystallization temperature thereof and lower than the melting point thereof, thereby performing so-called solid phase erasing. Here, in a data rewritable type optical recording medium having two information recording layers, since data are recorded or reproduced by focusing a laser beam onto one of the information recording layers, in the case of recording data in or reproducing data from the information recording layer farther from the light incidence plane (hereinafter referred to as an "L1 layer"), a laser beam is projected thereonto via the information recording layer closer to the light incidence plane (hereinafter referred to as an "L0 layer"). Therefore, since it is necessary for the L0 layer to have a sufficiently high light transmittance, it is general for the L0 layer to include no reflective film or even if the L0 layer includes a reflective film, the thickness of the reflective film is set to be very thin.

However, in a study done by the inventors of the present invention, it was found that in a data rewritable type optical recording medium having two information recording layers, data recorded in the L0 layer were liable to be degraded each time data were reproduced, namely, a so-called "data degradation phenomenon" due to reproduction tended to occur in the L0 layer. It is reasonable to conclude that this is because the L0 layer includes no reflective film or only a very thin reflective film and therefore has a lower heat radiation characteristic than that of the L1 layer having a sufficiently thick reflective film. More specifically, since metal is generally used as the material for forming a reflective film, heat generated in the L1 layer by irradiation with a laser beam can be quickly radiated through the reflective film having high thermal conductivity but since the L0 layer does not include such a layer having high thermal conductivity, heat generated in the L0 layer by irradiation with a laser beam cannot be quickly radiated, thereby causing the data degradation phenomenon.

On the other hand, in recent years, attempts have been made to record large quantities of data by setting the quotient (λ/NA) of the wavelength λ of the laser beam used for recording and/or reproducing divided by the numerical aperture (NA) of the objective lens used to focus the laser beam to be equal to or shorter than 700 nm, for example, by setting the numerical aperture NA to 0.7 or greater, e.g. roughly 0.85 and also shortening the wavelength λ of the laser beam to about 200 to 450 nm in order to make the focused spot diameter of the laser beam smaller and increase the recording density. In such a system that records and/or reproduces data using a laser beam of short wavelength converged by an objective lens having a high NA, the above mentioned data degradation phenomenon occurring in the L0 layer becomes pronounced owing to the extremely high energy of the converged laser beam per unit area.

### SUMMARY OF THE INVENTION

Accordingly, it is an object of the present invention to provide an information reproducing method for reproducing information from a data rewritable type optical recording medium having a plurality of information recording layers, which can prevent the data degradation phenomenon from occurring.

Further, another object of the present invention is to provide an information reproducing apparatus for reproducing information from a data rewritable type optical recording medium having a plurality of information recording layers, which can prevent the data degradation phenomenon from occurring.

Moreover, a further object of the present invention is to provide a data rewritable type optical recording medium having a plurality of information recording layers in which the data degradation phenomenon can be prevented from occurring.

The above object of the present invention can be accomplished by an information reproducing method for reproducing information from a data rewritable type optical recording medium having at least stacked first and second information recording layers by projecting a laser beam thereonto via a light incidence plane, the information reproducing method comprising steps of setting λ/NA to be equal to or shorter than 700 nm, where λ is a wavelength of the laser beam and NA is a numerical aperture (NA) of an objective lens, and setting the laser beam to a first power when information recorded in the first information recording layer is to be reproduced and a second power different from the first power when information recorded in the second information recording layer is to be reproduced.

In a preferred aspect of the present invention, the first information recording layer is located on the side of the light incidence plane with respect to the second information recording layer and the first power is lower than the second power.

In a further preferred aspect of the present invention, information is reproduced with the first power *Pr0* and the second power *Pr1* set so that *Pr0*/*Pr1* is smaller than 0.9.

In a further preferred aspect of the present invention, the laser beam has a wavelength of 200 to 450 nm.

The above object of the present invention can be also accomplished by an information reproducing apparatus for reproducing information from a data rewritable type optical recording medium having at least stacked first and second information recording layers by projecting a laser beam thereonto via a light incidence plane, the information reproducing apparatus being constituted so as to set λ/NA to be equal to or shorter than 700 nm, where λ is a wavelength of the laser beam and NA is a numerical aperture (NA) of an objective lens, and set the laser beam to a first power when information recorded in the first information recording layer is to be reproduced and a second power different from the first power when information recorded in the second information recording layer is to be reproduced.

The above object of the present invention can be also accomplished by an optical recording medium which has at least stacked first and second information recording layers and from which information can be reproduced by projecting a laser beam thereonto via a light incidence plane, the optical recording medium comprising setting information required for setting λ/NA to be equal to or shorter than 700 nm, where λ is a wavelength of the laser beam and NA is a numerical aperture (NA) of an objective lens, and setting the laser beam to a first power when information recorded in the first information recording layer is to be reproduced and a second power different from the first power when information recorded in the second information recording layer is to be reproduced.

In a preferred aspect of the present invention, the optical recording medium further comprises a light transmission layer for forming an optical path of the laser beam and the light transmission layer has a thickness of 30 to 200 µm.

According to the present invention, it is possible to prevent the data degradation phenomenon from occurring in the case of reproducing information from an optical recording medium having a plurality of information recording layers.

### BRIEF DESCRIPTION OF THE DRAWINGS

Figure 1 is a schematic cross section illustrating the structure of an optical recording medium 10 according to a preferred embodiment of the present invention.
Figure 2 is a drawing illustrating a part of a process (a step for forming a substrate 11) for manufacturing an optical recording medium 10.
Figure 3 is a drawing illustrating a part of a process (a step for forming an L1 layer 30) for manufacturing an optical recording medium 10.
Figure 4 is a drawing illustrating a part of a process (a step for forming a transparent intermediate layer 12) for manufacturing an optical recording medium 10.
Figure 5 is a drawing illustrating a part of a process (a step for forming an L0 layer 20) for manufacturing an optical recording medium 10.
Figure 6 is a schematic drawing of the major components of an information reproducing apparatus 50 for reproducing data from an optical recording medium 10.

### DESCRIPTION OF THE PREFERRED EMBODIMENTS

Preferred embodiments of the present invention will be explained in detail with reference to the drawings.

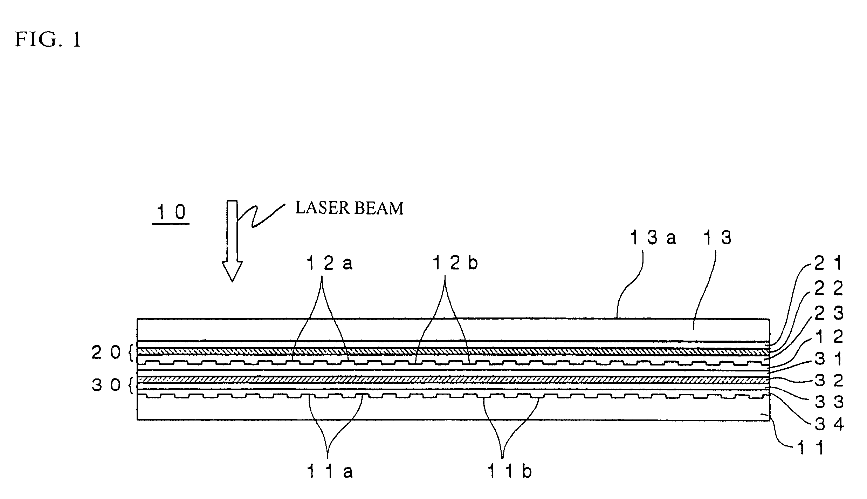

Figure 1 is a schematic cross section illustrating the structure of an optical recording medium 10 according to a preferred embodiment of the present invention.

As shown in Figure 1, an optical recording medium 10 according to this embodiment includes a substrate 11, an intermediate layer 12, a light transmission layer 13, an L0 layer 20 provided between the intermediate layer 12 and the light transmission layer 13 and an L1 layer 30 provided between the substrate 11 and the intermediate layer 12. The L0 layer 20 constitutes an information recording layer far from a light incidence plane 13a and is constituted by a first dielectric film 21, an L0 recording film 22 and a second dielectric film 23. Further, the L1 layer 30 constitutes an information recording layer close to the light incidence plane 13a and is constituted by a third dielectric film 31, an L1 recording film 32 and a fourth dielectric film 33. In this manner, the optical recording medium 10 according to this embodiment includes two information recording layers (the L0 layer 20 and the L1 layer 30).

The substrate 11 is a disc-like substrate having a thickness of about 1.1 mm serving as a support for ensuring mechanical strength required for the optical recording medium 10 and grooves 11a and lands 11b are formed on the surface thereof. The grooves 11a and/or lands 11b serve as a guide track for the laser beam L when data are to be recorded in the L1 layer 30 or when data are to be reproduced from the L1 layer 30. Although the depth of the groove 11a is not particularly limited, it is preferably set to 10 nm to 40 nm and the pitch of the grooves 11a is preferably set to 0.2 µm to 0.4 µm. Various materials can be used for forming the substrate 11 and the substrate 11 can be formed of glass, ceramic, resin or the like. Among these, resin is preferably used for forming the substrate 11 since resin can be easily shaped. Illustrative examples of resins suitable for forming the substrate 11 include polycarbonate resin, olefin resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin or olefin resin is most preferably used for forming the substrate 11 from the viewpoint of easy processing, optical characteristics and the like. In this embodiment, since the laser beam L does not pass through the substrate 11, it is unnecessary for the substrate 11 to have a light transmittance property.

The intermediate layer 12 serves to space the L0 layer 20 and the L1 layer 30 apart by a sufficient distance and grooves 12a and lands 12b are formed on the surface thereof. The grooves 12a and/or lands 12b serve as a guide track for the laser beam L when data are to be recorded in the L0 layer 20 or when data are to be reproduced from the L0 layer 20. The depth of the groove 12a and the pitch of the grooves 12a can be set to be substantially the same as those of the grooves 11a formed on the surface of the substrate 11. The depth of the intermediate layer 12 is preferably set to be 10 µm to 50 µm. The material for forming the intermediate layer 12 is not particularly limited and an ultraviolet ray curable acrylic resin is preferably used for forming the intermediate layer 12. It is necessary for the transparent intermediate layer 12 to have sufficiently high light transmittance since the laser beam L passes through the transparent intermediate layer 12 when data are to be recorded in the L1 layer 30 and data recorded in the L1 layer 30 are to be reproduced.

The light transmission layer 13 forms an optical path of a laser beam and a light incident plane 13a is constituted by one of the surfaces thereof. The thickness of the light transmission layer 13 is preferably set to be 30 µm to 200 µm. The material for forming the light transmission layer 13 is not particularly limited and, similarly to the intermediate layer 12, an ultraviolet ray curable acrylic resin is preferably used for forming the light transmission layer 13. As described above, it is necessary for the light transmission layer 13 to have sufficiently high light transmittance since the laser beam L passes through the transparent intermediate layer 13.

Each of the L0 recording film 22 and the L1 recording film 33 is formed of a phase change material. Utilizing the difference in the reflection coefficients between the case where the L0 recording film 22 and the L1 recording film 33 are in a crystal phase and the case where they are in an amorphous phase, data are recorded in the L0 recording film 23 and the L1 recording film 33. The material for forming the L0 recording film 22 and the L1 recording film 33 is not particularly limited but it is preferable to form them using a SbTe system material. As the SbTe system material, SbTe may be used alone, or InSbTeGe, AgInSbTe, Ag SbTeGe, AgInSbTeGe or the like containing In, Te, Ge, Ag or the like as additives may be used.

Since the laser beam passes through the L0 recording film 22 when data are recorded in the L1 layer 30 and data recorded in the L1 layer 30 are reproduced, it is necessary for the L0 layer 20 to have a high light transmittance. Therefore, the thickness of the L0 recording film 22 is set to be considerably thinner than that of the L1 recording film 32. Concretely, it is preferable to set the thickness of the L1 recording film 32 to be about 3 to 20 nm and the thickness of the L0 recording film 22 to be 0.3 to 0.8 times that of the L1 recording film 32.

The first dielectric film 21 and the second dielectric film 23 formed so as to sandwich the L0 recording film 22 serve as protective films for the L0 recording film 22 and the third dielectric film 31 and the fourth dielectric film 33 formed so as to sandwich the L1 recording film 32 serve as protective films for the L10 recording film 32. The thickness of the first dielectric film 21 is preferably set to be 2 to 200 nm, the thickness of the second dielectric film 23 is preferably set to be 2 to 200 nm, the thickness of the third dielectric film 31 is preferably set to be 2 to 200 nm and the thickness of the fourth dielectric film 33 is preferably set to be 2 to 200 nm.

Each of these dielectric films may have a single-layered structure or may have a multi-layered structure including a plurality of dielectric films. The material for forming each of these dielectric films is not particularly limited but it is preferable to form it of oxide, nitride, sulfide, carbide of Si, Al, Ta and Zn such as SiO₂, Si₃O₄, Al₂O₃, AlN, TaO, ZnS, CeO₂ and the like or a combination thereof.

The reflective film 34 serves to reflect the laser beam entering through the light incident plane 13a so as to emit it from the light incident plane 13a and the thickness thereof is preferably set to be 20 to 200 nm. The material for forming the reflective film 34 is not particularly limited but the reflective film 34 is preferably formed of an alloy containing Ag or Al as a primary component and may be formed of Au, Pt or the like. Further, a moisture proof film may be provided between the reflective film 34 and the substrate 11 in order to prevent the reflective film 34 from being corroded. Materials usable for forming each of the first dielectric film 21 to the fourth dielectric film 33 can be used for forming the moisture proof film. Further, although the L0 layer 20 includes no reflective film, a thin reflective film having a thickness of about 3 to 15 nm may be provided in the L0 layer 20. In this case, the reflective film can be formed of the same material as used for forming the reflective film 34.

When data are recorded in the thus constituted optical recording medium 10, a laser beam having a wavelength of 200 to 450 nm is projected onto the optical recording medium 10 via the light incidence plane 13a and the amount of the laser beam reflected from the optical recording medium 10 is detected. As described above, since the L0 recording film 22 and the L1 recording film 32 are formed of the phase change material and the reflection coefficient in the case where the phase change material is in the crystal phase and that in the case where it is in the amorphous phase are different from each other, it is possible to judge by projecting the laser beam via the light incidence plane 13a, focusing it onto one of the L0 recording film 22 and the L1 recording film 32 and detecting the amount of the laser beam reflected therefrom whether a region of the L0 recording film 22 or the L1 recording film 32 irradiated with the laser beam is in the crystal phase or the amorphous phase.

When data are to be recorded in the optical recording medium 10, a laser beam having a wavelength of 200 to 450 nm is projected to be focused onto one of the L0 recording film 22 and the L1 recording film 32 and in accordance with data to be recorded therein, a predetermined region of one of the L0 recording film 22 and the L1 recording film 32 is heated to a temperature equal to or higher than the melting point thereof and quickly cooled, thereby changing the phase thereof to the amorphous phase or a predetermined region of one of the L0 recording film 22 and the L1 recording film 32 is heated to a temperature equal to or higher than the crystallization temperature and gradually cooled, thereby changing the phase thereof to the crystal phase. The region whose phase has been changed to the amorphous phase is referred to as "a recording mark" and recorded data are expressed by the length from the starting point of the recording mark to the ending point thereof and the length from the ending point thereof to the starting point of the next recording mark. The length of each recording mark and the length between recording marks (edge to edge) are set to one of the lengths corresponding to 2*T* through 8*T* (where *T* is the clock period) when adopting the (1,7) RLL modulation scheme, although this is no particular limitation. A pulse train pattern used for recording data in the L0 recording film 22 and a pulse train pattern used for recording data in the L1 recording film 32 will be described later.

When recording data in or reproducing data from the L1 layer 30, a laser beam is projected onto the L1 recording film 32 via the L0 layer 20. Therefore, it is necessary for the L0 layer 20 to have a high light transmittance and, as pointed out above, the thickness of the L0 recording film 22 is set to be considerably thinner than that of the L1 recording film 32.

Here follows a description of the method of manufacturing an optical recording medium 10 according to this preferred embodiment.

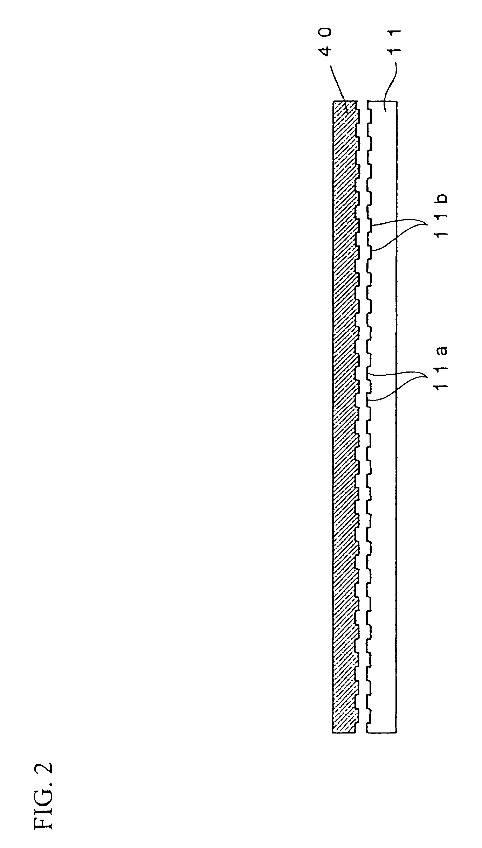

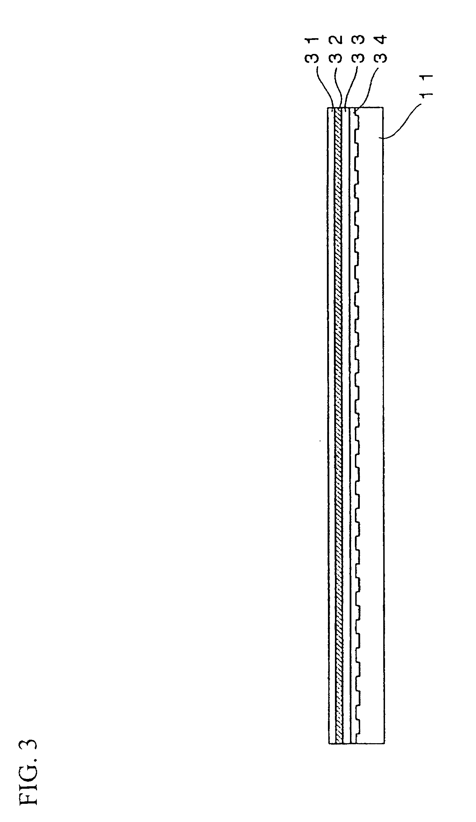

Figures 2 to 5 are step drawings illustrating the method of manufacturing the optical recording medium 10.

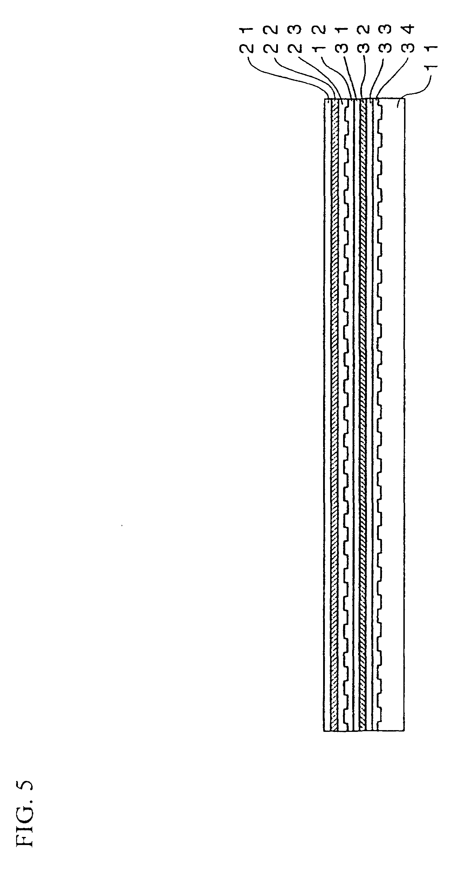

First, as shown in Figure 2, a stamper 40 is used to perform injection molding of a substrate 11 having grooves 11a and lands 11b. Next, as shown in Figure 5, the sputtering method is used to form, upon nearly the entire surface of the side of the substrate 11 on which the grooves 11a and the lands 11b are formed, a reflective film 34, a fourth dielectric film 33, an L1 recording film 32 and a third dielectric film 34 in this order, thereby forming an L1 layer 30. Here, the phase of the L1 recording film 32 is normally in an amorphous phase immediately after the sputtering is completed.

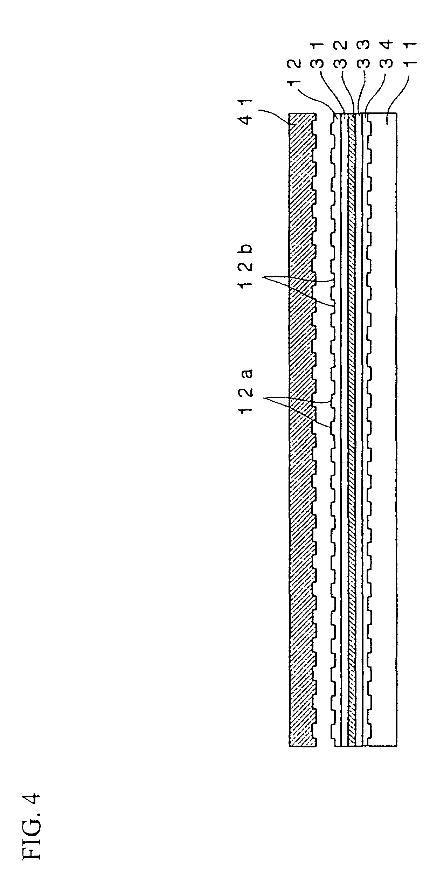

Next, as shown in Figure 4, ultraviolet curable acrylic resin is spin-coated onto the L1 layer 30, and by shining an ultraviolet ray through a stamper 41 in the state with its surface covered with the stamper 41, an intermediate layer 12 having grooves 12a and lands 12b is formed. Next, as shown in Figure 7, the sputtering method is used to form, upon nearly the entire surface of the intermediate layer 12 on which the grooves 11a and the lands 11b are formed, a second dielectric film 23, an L0 recording film 22 and a first dielectric film 21 in this order. Thus, an L0 layer 20 is completed. Here, the phase of the L0 recording film 22 is normally in an amorphous phase immediately after the sputtering is completed.

Moreover, as shown in Figure 1, ultraviolet curable acrylic resin is spin-coated onto the L0 layer 20, and by shining an ultraviolet ray, a light transmission layer 13 is formed. This completes all film deposition steps. In this specification, the optical recording medium in the state with the film deposition steps complete may also be called the "optical recording medium precursor."

Next, the optical recording medium precursor is placed upon the rotary table of a laser irradiation apparatus (not shown) and rotated while being continuously irradiated with a rectangular laser beam having a shorter length in the direction along the track and a longer length in the direction perpendicular to the track. By shifting the irradiation position in the direction perpendicular to the track each time the optical recording medium precursor makes one revolution, the rectangular laser beam can be shined over nearly the entire surface of the L0 recording film 22 and the L1 recording film 32. Thereby, the phase change material making up the L0 recording film 22 and the L1 recording film 32 is heated to a temperature equal to or higher than the crystallization temperature thereof and then cooled slowly, so the entire surface of the L0 recording film 22 and the L1 recording film 32 is put into the crystalline state, namely the unrecorded state. This process is called "an initializing process" in this specification.

When the initializing process is completed, the optical recording medium 10 is competed.

As described above, it is possible to record the desired digital data onto an optical recording medium 10 thus manufactured by aligning the focus of the laser beam during recording to either the L0 recording film 22 or the L1 recording film 32 to form recording marks. In addition, when data is recorded onto the L0 recording film 22 and/or L1 recording film 32 of the optical recording medium 10 in this manner, as described above, by aligning the focus of a laser beam set to playback power to either the L0 recording film 22 or the L1 recording film 32 and detecting the amount of light reflected, it is possible to play back the digital data thus recorded.

It is preferable to store "reproducing condition setting information" in the optical recording medium 10 as information for identifying various conditions required for reproducing digital data recorded in the L0 recording film 22 and the L1 recording film 32. If such reproducing condition setting information is stored in the optical recording medium 10, the reproducing condition setting information is read by an information reproducing apparatus when data are actually recorded in the optical recording medium 10 by the user and reproducing conditions such as the reproducing power (*Pr*) and the like can be determined based on the thus read reproducing condition setting information.

It is necessary for the reproducing condition setting information to include at least information required for determining a laser beam reproducing power (*Pr0*) set for reproducing data from the L0 layer 20 and a laser beam reproducing power (*Pr1*) set for reproducing data from the L1 layer 30, and it is preferable for it to include information required for identifying various conditions such as the linear reproducing velocity required to reproduce data from the optical recording medium 10. The reproducing condition setting information may be recorded in the optical recording medium 10 as a wobble signal or pre-pits, or it may be recorded as data in the L0 recording film 22 and/or the L1 recording film 32. Further, the reproducing condition setting information may include not only information directly indicating various conditions required to reproduce data but also information capable of indirectly identifying the reproducing conditions by specifying any of various conditions stored in the information reproducing apparatus in advance.

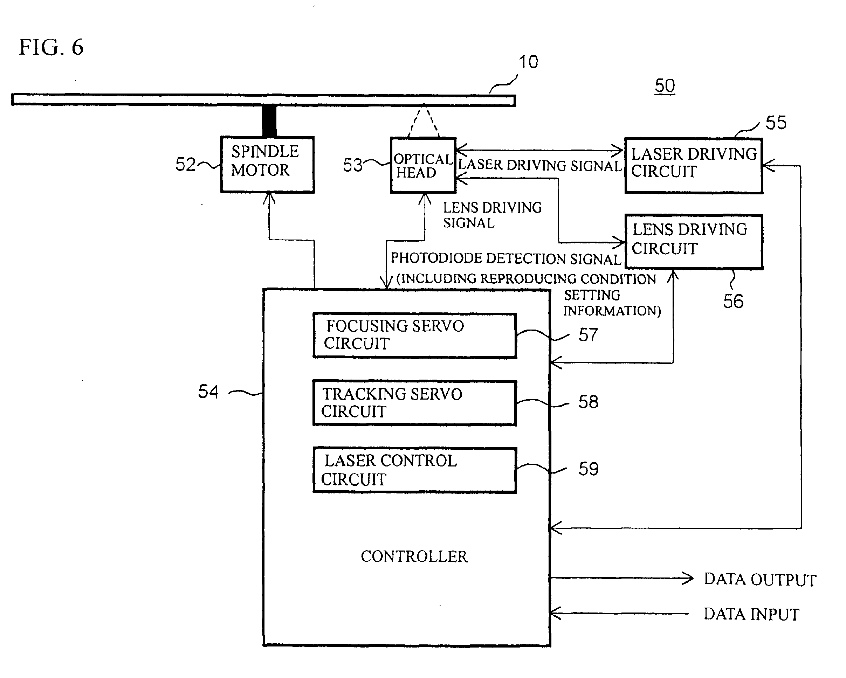

Figure 6 is a schematic drawing of the major components of an information reproducing apparatus 50 for reproducing data from the optical recording medium 10.

As shown in Figure 6, the information reproducing apparatus 50 is equipped with a spindle motor 52 for rotating an optical recording medium 10, a head 53 for shining a laser beam onto the optical recording medium 10, a controller 54 for controlling the operation of the spindle motor 52 and the head 53, a laser driving circuit 55 that supplies a laser driving signal to the head 53, and a lens driving circuit 56 that supplies a lens driving signal to the optical head 53. The head 53 is provided with an objective lens (not shown) for converging the laser beam onto the L0 recording film 22 or the L1 recording film 32 and the numerical aperture thereof is equal to or larger than 0.7 and is preferably about 0.85.

Moreover, as shown in Figure 6, the controller 54 includes a focusing servo circuit 57, a tracking servo circuit 58, and a laser control circuit 59. When the focusing servo circuit 57 is activated, the focus is aligned with the recording surface of the rotating optical recording medium 10, and when the tracking servo circuit 58 is activated, the spot of the laser beam begins to automatically track the eccentric signal track of the optical recording medium 10. The focusing servo circuit 57 and tracking servo circuit 58 are provided with an auto gain control function for automatically adjusting the focusing gain and an auto gain control function for automatically adjusting the tracking gain, respectively. In addition, the laser control circuit 59 is a circuit that generates the laser driving signal supplied by the laser driving circuit 55 and generates a laser driving signal based on recording condition setting information recorded on the optical recording medium 10.

Note that the focusing servo circuit 57, tracking servo circuit 58 and laser control circuit 59 need not be circuits incorporated in the controller 54 but can instead be components separate of the controller 54. Moreover, they need not be physical circuits but can instead be accomplished by software programs executed in the controller 54.

In the case of reproducing data from the optical recording medium 10 using the thus constituted information reproducing apparatus 50, as described above, the reproducing condition setting information recorded in the optical recording medium 10 is read and reproducing conditions are determined based on the thus read reproducing condition setting information. Therefore, in the case of reproducing data from the L0 layer 20, the information reproducing apparatus 50 sets the reproducing power of the laser beam to *Pr0* based on the thus read reproducing condition setting information and in the case of reproducing data from the L1 layer 30, the information reproducing apparatus 50 sets the reproducing power of the laser beam to *Pr1.*

In this embodiment, the relationship between the reproducing power (*Pr0*) of the laser beam used for reproducing data from the L0 layer 20 and the reproducing power (*Pr1*) of the laser beam used for reproducing data from the L1 layer 30 is set based on the reproducing condition setting information so that *Pr0* is lower than *Pr1* and, preferably, *Pr0*/*Pr1* is smaller than 0.9. Concretely, it is preferable to set *Pr0* to 0.4 to 0.5 mW and *Pr1* to 0.6 to 0.7 mW and it is more preferable to set *Pr0* to about 0.5 mW and *Pr1* to about 0.7 mW. Here, the values of the reproducing powers (*Pr0*, *Pr1*) are defined as those of the power of the laser beam at the surface of the optical recording medium 10. In this embodiment, the reproducing power (*Pr0*) of the laser beam used for reproducing data from the L0 layer 20 is set such a low value that the data degrading phenomenon can be prevented from occurring in the L0 layer 20.

It is a known practice when reproducing data from an optical recording medium having a plurality of information recording layers to set the reproducing power of the laser beam when data are to be reproduced from an information recording layer far from the light incidence plane to be higher than that of the laser beam when data are to be reproduced from an information recording layer close to the light incidence plane, thereby increasing reproduction sensitivity when data are reproduced from the information recording layer far from the light incidence plane (see Japanese Patent Application Laid Open No. 2000-36130). However, in the next-generation type optical recording medium to which the present invention is directed, since a laser beam having a wavelength of 200 to 450 nm is employed and the numerical aperture (NA) of an objective lens used for converging the laser beam is set to be equal to or higher than 0.7 and preferably to about 0.85, the energy of the converged laser beam per unit area is extremely high, so that the data degradation phenomenon is liable to occur. In particular, since the heat radiation characteristic of the L0 layer 20 is low, the data degradation phenomenon tends to occur markedly in the L0 layer 20. Therefore, unlike in the conventional method, the reproducing power cannot substantially be set based on the reproduction sensitivity.

From these viewpoints, in this embodiment, the reproducing power (*Pr0*) of the laser beam when data are to be reproduced from the L0 layer 20 and the reproducing power (*Pr1*) of the laser beam when data are to be reproduced from the L1 layer 30 are set at levels at which the data degradation phenomenon can be prevented from occurring and in the case of reproducing data from an optical recording medium by converging a laser beam having a wavelength λ of 200 to 450 nm using an objective lens having a numerical aperture (NA) equal to or higher than 0.7, preferably about 0.85, they are set so that *Pr0* is lower than *Pr1*, preferably *Pr0*/*Pr1* is smaller than 0.9.

Thereby, it is possible to suppress occurrence of the data degradation phenomenon not only in the L0 layer 20 in which it is most likely to occur but also in the L1 layer 30.

As described above, according to the present invention, it is possible to prevent the data degradation phenomenon from occurring in the case of reproducing data from an optical recording medium having a plurality of information recording layers.

Here, the data degradation phenomenon tends to occur as the wavelength of the laser beam used for reproducing data is shorter and the numerical aperture (NA) of the objective lens used for converging the laser beam is larger. Therefore, the present invention is particularly effective in the case where the quotient (λ/NA) of the wavelength λ of the laser beam used for reproducing data divided by the numerical aperture (NA) of the objective lens used to focus the laser beam is set to be equal to or shorter than 700nm, for example, where the numerical aperture NA is set to be 0.7 or greater (particularly, roughly 0.85) and the wavelength λ of the laser beam is set to be about 200 to 450 nm.

### WORKING EXAMPLE

Hereinafter, a Working Example will be described concretely.

### Fabrication of an optical recording medium 10

A stamper 40 shown in Figure 2 was first used to perform injection molding of polycarbonate, thereby fabricating a substrate 11 having grooves 11a whose depth was 34 nm and whose pitch was 0.32 µm and a thickness of 1.1 mm.

Then, the substrate 11 was set in a sputtering apparatus (not shown) and an Ag alloy, a mixture of ZnS and SiO₂ (mole ratio of 80:20), AgSbTeGe and a mixture of ZnS and SiO₂ (mole ratio of 80:20) were sputtered in this order on nearly the entire surface of the side of the substrate 11 on which the grooves 11a and the lands 11b were formed, thereby forming an L1 layer 30, namely, a reflective film 34 having a thickness of 100 nm, a fourth dielectric film 33 having a thickness of 15 nm, an L1 recording film 32 having a thickness of 12 nm and a third dielectric film 31 having a thickness of 80 nm.

Next, the substrate 11 formed with the L1 layer was picked out from the sputtering apparatus and an ultraviolet ray curable resin was applied onto the third dielectric film 31 using a spin coating process. Further, an ultraviolet ray was shined on the surface of the spin-coated ultraviolet ray curable resin through a stamper 41 shown in Figure 4 in the state with its surface covered with the stamper 41, thereby forming an intermediate layer 12 having grooves 12a whose depth was 34 nm and whose pitch was 0.32 µm and a thickness of 20 µm.

Then, the substrate 11 formed with the L1 layer 30 and the intermediate layer 12 was set in the sputtering apparatus and Al₂O₃, SbTe and a mixture of ZnS and SiO₂ (mole ratio of 80:20) were sputtered in this order on nearly the entire surface of the side of the intermediate layer 12 on which the grooves 12a and the lands 12b were formed, thereby forming an L0 layer 20, namely, a second dielectric film 23 having a thickness of 70 nm, an L0 recording film 22 having a thickness of 8 nm and a first dielectric film 21 having a thickness of 60 nm.

Further, after the substrate 11 formed with the L1 layer 30, the intermediate layer 12 and the L0 layer 20 was picked out from the sputtering apparatus, an ultraviolet ray curable resin was applied onto the first dielectric film 21 using a spin coating process and an ultraviolet ray was shined on the spin-coated ultraviolet ray curable resin, thereby forming a light transmission layer 13 having a thickness of 100 µm. Thus, an optical recording medium precursor was fabricated.

Next, the optical recording medium precursor was placed upon the rotary table of a laser irradiation apparatus (not shown) and rotated while being continuously irradiated with a rectangular laser beam having a shorter length in the direction along the track and a longer length in the direction perpendicular to the track. The irradiation position was shifted in the direction perpendicular to the track each time the optical recording medium precursor made one revolution, thereby crystallizing substantially the entire surface of the L0 recording film 22 and the L1 recording film 32. Thus, an optical recording medium 10 to be used in this Working Example was completed.

### Recording data

Data were recorded in the L0 layer 20 of the thus fabricated optical recording medium 10 by setting a recording power (*Pw*), an erasing power (*Pe*) and a bottom power (*Pb*) to 6.0 mW, 1.5 mW and 0.1 mW, respectively and then, data were recorded in the L1 layer 30 of the optical recording medium 10 by setting the recording power (*Pw*), the erasing power (*Pe*) and the bottom power (*Pb*) to 10.0 mW, 3.8 mW and 0.1 mW, respectively. Here, the values of the recording power (*Pw*), the erasing power (*Pe*) and the bottom power (*Pb*) were defined as those at the surface of the optical recording medium 10. Random signals in the (1,7) RLL modulation scheme were recorded as data by setting a clock frequency to 65.7 MHz (*T*= 15.2 nsec) and a linear recording velocity to 5.7 m/sec. The number of pulses of the laser beam (the number of times the power of the laser beam was raised to the recording power (*Pw*)) used for forming recording marks 2*T* to 8*T* was set to **n** -**1** where **n** was a multiple of *T* (2 to 8). The wavelength of the laser beam used for recording data was 405 nm and the numerical aperture of an objective lens used for converging the laser beam was 0.85.

### Reproducing data

Data recorded on a predetermined track were reproduced one million times while the level of a reproducing power (*Pr0*, *Pr1*) was varied and jitter of the reproduced signals was measured. The jitter was calculated based on the formula: σ/Tw (%) where Tw was one clock period by measuring clock jitter using a time interval analyzer and obtaining the fluctuation σ of the reproduced signal. The results of measurement of jitter of signals reproduced from the L0 layer 20 are shown first in Table 1.

**TABLE 1**

| Number of reproductions | Reproducing power (*Pr0*) | | | | |
|---|---|---|---|---|---|
| | 0.3 mW | 0.4 mW | 0.5 mW | 0.6 mW | 0.7 mW |
| Ten | unmeasurable | 11.1% | 10.8% | 10.8% | 10.9% |
| One million | unmeasurable | 11.1% | 10.8% | 10.8% | 14.7% |

As shown in Table 1, in the case of reproducing data recorded in the L0 layer 20, jitter of the signals reproduced ten times was about 11 % and did not change substantially while the reproducing power (*Pr0*) was varied but when the reproducing power (*Pr0*) was set to be equal to or higher than 0.6 mW, jitter of the signals reproduced one million times became markedly worse. It is reasonable to conclude that this is because data recorded in the L0 layer 20 was degraded due to reproduction when the reproducing power (*Pr0*) was set to be equal to or higher than 0.6 mW.

On the other hand, when the reproducing power (*Pr0*) was set to 0.4 to 0.5 mW, jitter of the signals reproduced one million times was substantially the same as that of the signals reproduced ten times and the data degradation phenomenon was not observed. Further, by comparing the case where the reproducing power (*Pr0*) was set to 0.4 mW and the case where the reproducing power (*Pr0*) was set to 0.5 mW, it was found that good jitter characteristics could be obtained in the case where the reproducing power (*Pr0*) was set to 0.5 mW. It is reasonable to conclude that this is because reproduction sensitivity improved as the reproducing power (*Pr0*) was higher.

When the reproducing power (*Pr0*) was set to 0.3 mW, sensitivity was too low to measure jitter.

In view of the above, it was found that in the case of reproducing data recorded in the L0 layer 20, it was preferable to set the reproducing power (*Pr0*) to 0.4 mW to 0.5 mW and was more preferable to set the reproducing power (*Pr0*) to about 0.5 mW.

The results of measurement of jitter of signals reproduced from the L1 layer 30 are next shown in Table 2.

**TABLE 2**

| Number of reproductions | Reproducing power (*pr1*) | | | |
|---|---|---|---|---|
| | 0.5 mW | 0.6 mW | 0.7 mW | 0.8 mW |
| Ten | 12.7% | 9.6% | 9.3% | 9.5% |
| One million | 12.6% | 9.6% | 9.3% | 12.9% |

As shown in Table 2, it was found that in the case of reproducing data recorded in the L1 layer 30 the data degradation phenomenon occurred when the reproducing power (*Pr1*) was set to 0.8 mW. It is reasonable to conclude that the reproducing power Pr1 at which the data degradation phenomenon occurred was 0.8 mW, i.e., higher than that in the case of reproducing data recorded in the L0 layer 20, due to the difference in radiation characteristics between the L0 layer 20 and the L1 layer 30.

Further, it was found that when the reproducing power (*Pr1*) was set to be equal to or lower than 0.7 mW, jitter characteristics improved with increasing reproducing power (*Pr1*). It is reasonable to conclude that this is because reproduction sensitivity improved as the reproducing power (*Pr1*) was higher.

In view of the above, it was found that in the case of reproducing data recorded in the L1 layer 30, it was preferable to set the reproducing power (*Pr1*) to 0.6 mW to 0.7 mW and it was more preferable to set the reproducing power (*Pr1*) to about 0.7 mW.

## Claims

1. An information reproducing method for reproducing information from a data rewritable type optical recording medium having at least stacked first and second information recording layers by projecting a laser beam thereonto via a light incidence plane, the information reproducing method comprising steps of setting λ/NA to be equal to or shorter than 700 nm, where λ is a wavelength of the laser beam and NA is a numerical aperture (NA) of an objective lens, and setting the laser beam to a first power when information recorded in the first information recording layer is to be reproduced and a second power different from the first power when information recorded in the second information recording layer is to be reproduced.

2. An information reproducing method in accordance with Claim 1, wherein the first information recording layer is located on the side of the light incidence plane with respect to the second information recording layer and the first power is lower than the second power.

3. An information reproducing method in accordance with Claim 2, wherein information is reproduced with the first power *Pr0* and the second power *Pr1* set so that *Pr0*/*Pr1* is smaller than 0.9.

4. An information reproducing method in accordance with Claim 1, wherein the laser beam has a wavelength of 200 to 450 nm.

5. An information reproducing method in accordance with Claim 2, wherein the laser beam has a wavelength of 200 to 450 nm.

6. An information reproducing method in accordance with Claim 3, wherein the laser beam has a wavelength of 200 to 450 nm.

7. An information reproducing apparatus for reproducing information from a data rewritable type optical recording medium having at least stacked first and second information recording layers by projecting a laser beam thereonto via a light incidence plane, the information reproducing apparatus being constituted so as to set λ/NA to be equal to or shorter than 700 nm, where λ is a wavelength of the laser beam and NA is a numerical aperture (NA) of an objective lens, and set the laser beam to a first power when information recorded in the first information recording layer is to be reproduced and a second power different from the first power when information recorded in the second information recording layer is to be reproduced.

8. An information reproducing apparatus in accordance with Claim 7, wherein the first information recording layer is located on the side of the light incidence plane with respect to the second information recording layer and the first power is lower than the second power.

9. An information reproducing apparatus in accordance with Claim 7, wherein the laser beam has a wavelength of 200 to 450 nm.

10. An information reproducing apparatus in accordance with Claim 8, wherein the laser beam has a wavelength of 200 to 450 nm.

11. An optical recording medium which has at least stacked first and second information recording layers and from which information can be reproduced by projecting a laser beam thereonto via a light incidence plane, the optical recording medium comprising setting information required for setting λ/NA to be equal to or shorter than 700 nm, where λ is a wavelength of the laser beam and NA is a numerical aperture (NA) of an objective lens, and setting the laser beam to a first power when information recorded in the first information recording layer is to be reproduced and a second power different from the first power when information recorded in the second information recording layer is to be reproduced.

12. An optical recording medium in accordance with Claim 11, wherein the first information recording layer is located on the side of the light incidence plane with respect to the second information recording layer and the first power is lower than the second power.

13. An optical recording medium in accordance with Claim 11, which further comprises a light transmission layer for forming an optical path of the laser beam and the light transmission layer has a thickness of 30 to 200 µm.

14. An optical recording medium in accordance with Claim 12, which further comprises a light transmission layer for forming an optical path of the laser beam and the light transmission layer has a thickness of 30 to 200 µm.
